# FASCICULE DE BREVET EUROPEEN

(11) **EP 0 385 868 B1**
(45) Date de publication et mention de la délivrance du brevet: **03.02.1993**
(21) Numéro de dépôt: 90400567.5
(22) Date de dépôt: 01.03.1990
(51) Int. Cl.: B29C 53/08, B29C 57/06, B29C 33/50

(54) **Procédé de formage des extrémités de tubes de caoutchouc au cours de la vulcanisation sur mandrin et outillage déformable pour réaliser cette opération**
Verfahren zum Formen von Gummirohrendstücken während deren Vulkanisierung auf einem Dorn und verformbares Werkzeug zum Durchführen dieses Verfahrens
Process for forming rubber tube extremities during their vulcanization on a mandrel and deformable tooling for execution of the process

(30) Priorité: 02.03.1989 FR 8902879
(43) Date de publication de la demande: 05.09.1990
(73) Titulaire: CAOUTCHOUC MANUFACTURE ET PLASTIQUES, F-78000 Versailles (FR)
(72) Inventeur: Deschamps, Michel, F-58000 Nevers (FR); Le Barbier, Armand, F-58640 Varennes-Vauzelles (FR)

(56) Documents cités:
- DE-A- 2 737 277
- FR-A- 2 195 935
- FR-A- 2 518 014
- FR-A- 2 548 086

## Description

L'invention est relative à la fabrication de tubes souples reliant deux embouts de circuit de refroidissement sur moteur ou sur machines, tels que les éléments de raccordement destinés à l'automobile et à toute circulation de fluide dans les équipements industriels, agricoles ou analogues.
Elle concerne plus précisément les longueurs de tubes sinueux, conformés pour s'adapter à des passages encombrés, réalisés par vulcanisation d'un tube en élastomère, préparé sous forme d'ébauche par extrusion et engagé sur un mandrin.

L'industrie automobile, par les fabrications en grandes séries de composants qu'elle exige, entraîne le choix du procédé de fabrication le plus économique des produits pour satisfaire une fonction, même si leur réalisation est possible par d'autres moyens. Ainsi, le moulage de tubes de formes complexes en caoutchouc, quoique possible, est complètement détroné, pour des raisons économiques, par la réalisation d'une ébauche tubulaire constituée d'un tube interne, bien souvent renforcé par tressage, par tricotage ou par guipage en continu de fils textiles. Le passage du tube interne renforcé dans une extrudeuse à tête d'équerre permet de recouvrir ce renfort d'un revêtement en élastomère. Cette opération, réalisée en continu, est suivie d'une coupe à longueur de l'ébauche crue, qui est ensuite engagée à force sur un mandrin lui donnant sa forme définitive puis vulcanisée en autoclave et "détringlée" à force.

Ce procédé de fabrication des éléments de raccordement tubulaires, très répandu, est, selon les besoins, suivi d'un renforcement par bande adhésive textile, avec ou sans recoupe à la longueur, compte tenu de la précision et de l'état de surface obtenus sur les extrêmités et selon les exigences de l'utilisation. Comme un collier vient, dans la majorité des cas, sécuriser l'emmanchement sur un embout, les utilisateurs cherchent une précision dans l'épaisseur, l'état de surface et le positionnement des extrêmités que ne satisfait pas toujours le procédé de vulcanisation, sans nécessité de moule, en étuve, dit "cuit libre".

Divers perfectionnements cherchent à parfaire localement la géométrie de ces extrêmités, sans aller jusqu'à la réalisation, trop coûteuse, d'un moulage en grande série de pièces aussi volumineuses, et le plus souvent renforcées de textiles pour assurer leur raideur ou leur résistance à l'éclatement. L'un des plus récents est décrit dans le brevet soviétique SU 1.331.660 de KHOMSKOV, dans lequel la mécanisation d'une rampe portant plusieurs mandrins coudés permet, après flexion des ébauches tubulaires, la vulcanisation simultanée en autoclave de plusieurs éléments de raccordement identiques.
La face interne et la face d'extrêmité sont soutenues pendant la cuisson et, donc, présentent un état amélioré par rapport au procédé dit "cuit libre" évitant une coupe à longueur ultérieure. La régularité du diamètre extérieur et de l'épaisseur de l'élément de raccordement, ni, d'ailleurs, son état de surface externe ne sont améliorés par ce procédé.

Le brevet déposé en Allemagne Démocratique DD 249222 de VEB GUMMIW THURINGEN décrit un procédé de moulage d'ébauches tubulaires crues dans des empreintes femelles, sous l'effet d'une pression interne de gaz ou de liquide. Ce moyen peut assurer un bon état de surface extérieur sans, cependant, maîtriser l'ovalisation des éléments de raccordement ou leur épaisseur. Le procédé implique l'utilisation de moules lourds, car de grandes dimensions, sans l'avantage de la pression de vulcanisation élevée, usuelle au moulage, la pression mise en jeu dans la technique décrite n'étant qu'une pression de vapeur.

Le brevet japonais J62-256.614 de TOYODA décrit, de façon inverse, un embout de mandrin interne permettant, pendant la vulcanisation, de conformer les extrêmités épanouies d'un tube par vulcanisation en autoclave. Là encore la constance de l'épaisseur n'est pas maîtrisée.

Le brevet japonais J62-019.414 de TOKAI RUBBER est plus proche de la fabrication par emmanchement sur un mandrin en forme. Il prévoit la fixation à chaque extrêmité d'un manchon cylindrique à l'intérieur duquel deux machoires, refermées par vissage sur l'ébauche et accrochées sur ledit mandrin, permettent le formage à volonté, par moulage partiel de la surface extérieure, par exemple de collerettes destinées à retenir un collier.

L'opération d'assemblage par vis et démontage après vulcanisation en étuve rejoint les difficultés connues des moulages, sans utiliser l'avantage d'une pression élevée. Le procédé peut assurer une forme extérieure satisfaisante et en contrôler le centrage par rapport au mandrin interne ; cependant, il n'apporte pas la garantie que la matière remplisse tout le moule ; une bavure entre moitiés du moule peut être une gêne pour la pose d'un collier ou nécessiter un ébavurage.

La présente invention cherche à remédier aux insuffisances ou coûts excessifs des procédés connus de l'art antérieur, sans modifier la technique du boudinage d'une ébauche emmanchée sur un mandrin de vulcanisation en étuve. Elle apporte la possibilité de mouler des reliefs ou des encoches sur la surface extérieure de l'élément de raccordement tubulaire, de façon à imposer le positionnement axial d'un collier. Le procédé permet également de marquer des épaulements empêchant un collier à vissage tangent de tourner et d'échapper au tournevis, ainsi que tout marquage en creux ou en relief.

Ces formes n'imposant pas la périphérie rigoureuse d'un moule rigide permettent cependant de mieux contrôler la constance d'épaisseur d'une ébauche qui présente les dispersions inhérentes au procédé d'extrusion.

L'invention concerne un procédé de formage, au cours de la vulcanisation en étuve, sur un mandrin, des extrémités d'ébauche de tube en composition élastomérique, dans lequel :
a) ladite ébauche est enfilée sur le mandrin, jusqu'à venir buter sur un épaulement constitué par une bague,
b) un verrouillage est réalisé par l'intermédiaire d'une bague amovible qui vient buter sur les extrémités de l'ébauche,
c) les extrémités de l'ébauche sont enserrées sur le mandrin, par un outillage de formage,
d) l'ensemble comprenant l'ébauche, le mandrin et l'outillage de formage est placé dans une étuve pour la vulcanisation de ladite ébauche,
e) l'ensemble est retiré de l'étuve, après la vulcanisation de l'ébauche,
f) les extrémités du tube en composition élastomérique, alors vulcanisé, sont dégagées de l'outillage de formage,
g) après refroidissement, le tube en composition élastomérique est dégagé du mandrin.

Un tel procédé est généralement connu (par example du document FR-A-2 548 086).

Selon l'invention le problème décrit ci-dessus est résolu :
- en ce que l'outillage de formage est constitué d'une jupe radialement déformable, en composition élastomérique vulcanisée,
- en ce que le serrage des extrémités de l'ébauche sur le mandrin est assuré sous l'effet de la seule élasticité circonférentielle d'une corolle constituant la partie d'extrémité libre de ladite jupe radialement déformable, et
- en ce que les extrémités du tube en composition élastomérique vulcanisé sont dégagées de la jupe radialement déformable par une légère poussée axiale sur ladite corolle.

L'invention sera mieux comprise à la lecture de la description accompagnant les dessins dans lesquels :
- la figure 1 est une coupe du mandrin équipé de deux jupes radialement déformables, en position sur une pièce en cours de fabrication ;
- la figure 2 est une vue de détail, en coupe axiale, d'une jupe radialement déformable selon l'invention, comparant les positions de travail et de repos ;
- la figure 3 est la même coupe de la jupe radialement déformable, comparée à la position de travail, en position retroussée permettant la mise en place de l'ébauche sur le mandrin.

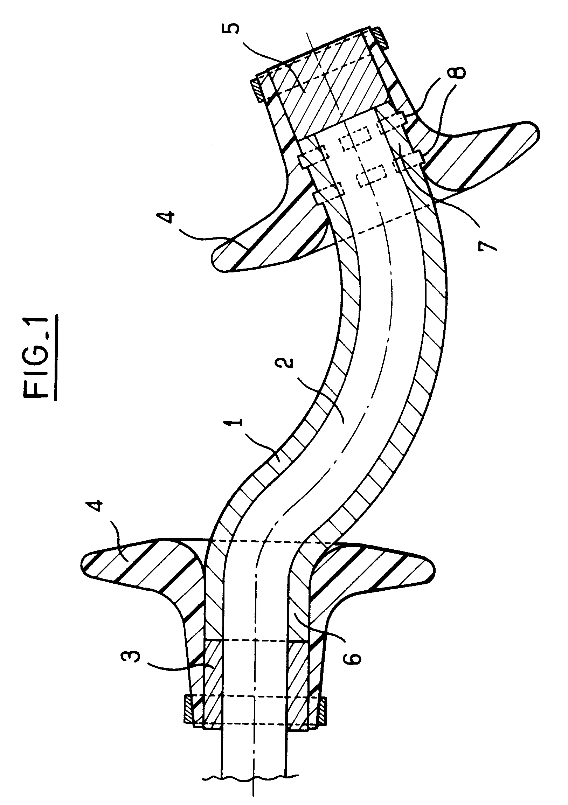

La figure 1 est une vue en coupe de l'outillage tel qu'il est utilisé dans l'étuve de vulcanisation pour former les deux extrêmités d'une ébauche (1). De manière classique, est désignée par le terme "ébauche" une longueur définie de profilé tubulaire cru, c'est-à-dire non vulcanisé, ledit profilé étant généralement constitué par un revêtement déposé par une extrudeuse à tête d'équerre par dessus un tube interne comportant un renforcement textile.

Ladite ébauche, encore très déformable, est enfilée sur un mandrin (2), cylindrique de révolution à ses seules extrêmités. Sa section est circulaire, son axe étant souvent très sinueux, non nécessairement dans un plan, comme représenté par commodité. Le procédé permet à la section d'être ovalisée, c'est-à-dire de ne pas rester parfaitement circulaire si la périphérie du tube reste assez constante.

L'ébauche (1) vient buter sur un épaulement constitué par une bague (3) du côté fixe, qui porte, comme le côté amovible, une jupe radialement déformable (4). Le mandrin (2), au-delà de la bague (3), est solidaire de moyens de fixation et de manutention non représentés. Après mise en place, l'opérateur verrouille par une opération simple - par baïonnette ou clavetage - une bague amovible (5) qui vient buter sur l'ébauche (1).

En cas de défauts de découpe de l'ébauche, l'opérateur dispose encore d'un contrôle visuel de l'appui sur les bagues (3) et (5), car les deux jupes radialement déformables (4) peuvent être, à ce moment, retroussées dans un équilibre stable sous légère tension de leur corolle. Un enlèvement ou moletage de matière est encore possible pour réduire le défaut avant le retournement des deux jupes à leur position d'équilibre, enserrant les extrêmités (6) et (7) de l'ébauche.

Dans la variante représentée à titre d'exemple non limitatif, l'extrêmité (6) présente une surface lisse cylindrique imposée à l'ébauche par le léger serrage de la jupe radialement déformable (4) associée à la bague (3) lorsque la composition élastomérique de ladite ébauche devient relativement fluide en début de vulcanisation.

Dans d'autres réalisations, la surface cylindrique interne de la jupe radialement déformable (4) peut présenter tous les marquages en creux ou en relief que l'utilisation peut imposer. Cette technique permet la reproduction de logos, de marques ou d'inscriptions avec les faibles déformations autorisées par la position à peine déformée que prend le diamètre intérieur de la jupe radialement déformable (4) en appui sur l'ébauche (1).

La pression par la jupe radialement déformable (4) sur l'extrêmité (6) doit être limitée en raison de la viscosité que présente ladite ébauche, pour éviter que la composition élastomérique ne soit refoulée dans la partie de l'ébauche non recouverte, qui entoure le reste du mandrin (2).

Il a été représenté à l'extrêmité (7) la possibilité la plus intéressante, de former deux collerettes (8) en relief sur la surface cylindrique de l'extrêmité de la pièce finie.

Ces collerettes, soit continues, soit formées de plusieurs éléments séparés, comme le procédé le permet sans dépense supplémentaire, sont souhaitables pour le positionnement des colliers engagés habituellement sur l'élément de raccordement tubulaire.

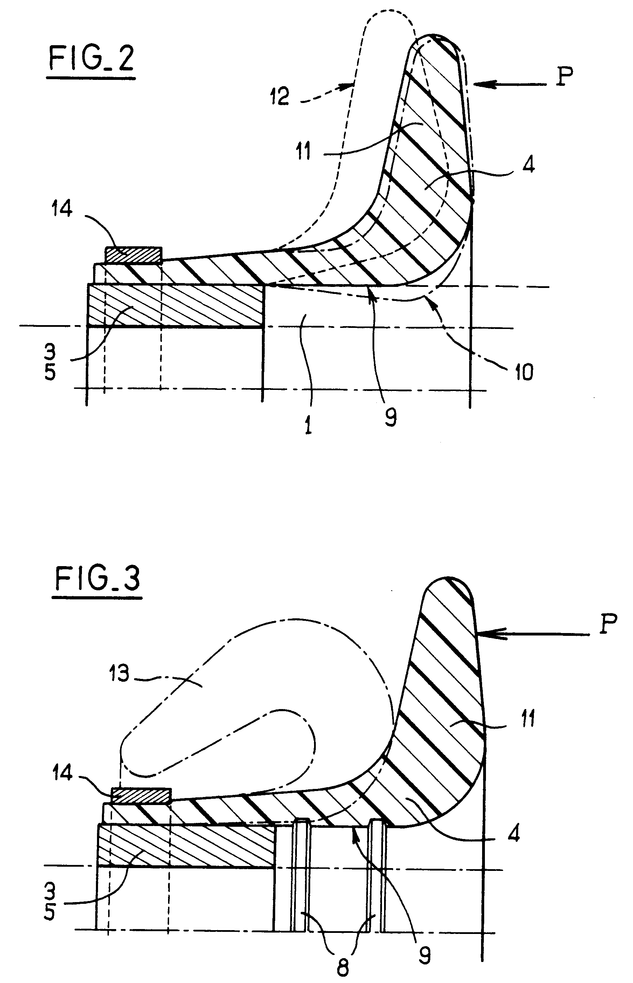

La figure 2 est une vue plus détaillée, dans la même coupe axiale, d'une jupe radialement déformable (4) fixée sur une bague (3) engagée sur le mandrin (2), aussi bien que, dans la même géométrie, montée sur la bague amovible (5).

La demi-coupe axiale de la jupe radialement déformable (4), représente en traits pleins sa position de travail, sa face interne (9), sensiblement cylindrique, et située dans le prolongement du diamètre extérieur de la bague (3) impose, dans ce cas, une légère pression sur l'ébauche (1). La position de repos (10), forme de fabrication de l'outillage constitué par la jupe radialement déformable (4), est représentée en traits mixtes, en contraction libérée des contraintes de traction que subit la corolle (11). A la position de travail, lesdites contraintes sont réparties dans toute la masse exerçant ainsi, sur la surface de l'ébauche (1), une faible pression, même aux températures de vulcanisation.
La déformabilité de la jupe est exploitée pour l'échappement éventuel de gaz inclus, dans la composition élastomérique, pendant la vulcanisation.
Un défaut majeur de matière ou de viscosité se traduirait sur la pièce par un manque d'épaisseur, éventuellement rédhibitoire, en retrait de la zone conformée pour supporter un collier, l'épaisseur restant respectée sur la face d'extrêmité de la pièce, car imposée par l'épaisseur de la bague (3) ou (5). Un tel défaut de fabrication est rendu plus visible par l'apparition d'une dénivellation entre la partie rendue lisse par le contact de la jupe radialement déformable (4) et la partie cuit libre dont l'état de surface est toujours plus irrégulier. Cette détection de pièces défectueuses peut avantageusement être automatisée, car elle est quantifiable.

Une position intermédiaire (12) illustre le début de déformation que prend la jupe radialement déformable (4) sous l'effet d'une poussée axiale (P) exercée sur sa corolle (11). Cette manoeuvre qui dégage aussitôt la surface de la face interne (9), éventuellement marquée de reliefs, permet un dégagement aisé de la pièce, d'abord par déverrouillage de la bague amovible (5), puis par détringlage de la pièce finie, en prenant naturellement appui sur la corolle (11).

La figure 3 est aussi une demi-coupe axiale de la même jupe radialement déformable (4), comparant la position de travail, représentée en traits pleins et une position retroussée (13) obtenue en exagérant la poussée axiale (P) sur la corolle (11) et effectivement stable par tension circonférentielle de ladite corolle (11).

La position retroussée (13) est permise, à des températures inférieures à la température de vulcanisation dans l'étuve, c'est-à-dire au cours des opérations de préparation où l'ébauche est placée sur le mandrin, par la déformabilité de l'outillage constitué par la jupe radialement déformable (4). Celle-ci est fixée sur la bague (3), avec serrage assuré par un collier de maintien (14) sur, au plus, la moitié de la longueur de la bague (3).

Cette disposition permet à la jupe radialement déformable (4) de glisser le long de la partie libre de la bague (3) lorsqu'elle est manoeuvrée par une poussée axiale (P) sur la corolle (11). Pour préserver la durée de vie de la jupe radialement déformable (4), la position retroussée (13) ne doit être utilisée que pendant de courtes périodes correspondant aux opérations de préparation. La fabrication normale doit donc l'éviter et, comme elle présente l'avantage de libérer les deux mains de l'opérateur, la réserver aux opérations de retouches éventuelles.

Un fluage, résultant du maintien dans cette position retroussée (13), détériorerait la position de repos (10) et, par conséquent, la position de travail où la face interne (9) doit rester sensiblement cylindrique. Cette position de travail est celle où sont formées les collerettes (8) ou les marquages à reproduire sur les pièces ; or, une déformation, due au vieillissement de l'outillage, modifierait la forme de toutes les pièces fabriquées.

La déformation de la zone concernée ou l'apparition de craquelures en surface donne la limite de durée d'utilisation d'un tel outillage déformable. En effet, la réticulation de la composition élastomérique qui la constitue continuant à se produire lors de chaque fabrication de pièces, entraîne l'accroissement progressif de la rigidité de la jupe radialement déformable (4) et de sa corolle (11), rendant inutilisable l'outillage dont la déformabilité constitue le mode d'utilisation.

Cependant, la durée de vie de la jupe radialement déformable (4) se mesurant en centaines de cycles de fabrication, le coût de son remplacement n'affecte que faiblement celui des pièces finies.

Les élastomères nécessaires à la fabrication, par moulage, de la jupe radialement déformable (4) sont choisis parmi la vaste gamme des élastomères synthétiques et, plus particulièrement pour garantir une durée de vie suffisante, parmi ceux présentant une bonne tenue thermique. A titre d'exemples non limitatifs, sont avantageusement sélectionnés les élastomères capables de résister, en continu ou pendant des périodes relativement longues ou fréquentes, à des températures supérieures à 140°C.

Préférentiellement, la composition élastomérique constituant de la jupe radialement déformable (4) utilise, comme élastomère de base un terpolymère d'éthylène, de propylène et d'un diène monomère (désigné, dans la norme ASTR D 1418 par EPDM), un élastomère de silicone du type polysiloxane (VMQ, PVMQ, MQ, PMQ), un polyacrylate (ACN ou ANM), un copolymère éthylène/acrylique ou des polymères fluorés du type perfluoroélastomère (FFKM), fluoro-silicone tel le fluoro vinyl méthyl siloxane (FVMQ), ou fluoro-carbone tel les hydrocarbones fluorés (FKM).

La composition élastomérique pourra combiner deux ou plus de ces élastomères, en fonction de leur compatibilité relative.

Les autres composants de la composition élastomérique, tels les agents réticulants, antioxydants, et les charges renforçantes sont choisis, par le formulateur de mélange, pour contribuer à l'amélioration de la résistance à la chaleur. La jupe radialement déformable (4) est réalisée par moulage de la composition élastomérique, dans l'empreinte d'un moule fermé dans lequel est disposé un élément portant les formes, marquages ou collerettes, à reproduire, avantageusement amovible, afin de permettre la flexibilité de fabrication de différentes formes dans le même moule.

En résumé, le procédé de formage, selon l'invention et les variantes de formes ou de combinaisons d'empreintes qui peuvent en résulter apportent à la vulcanisation en étuve sur mandrin de l'art antérieur une possibilité économique de marquage de repères et instructions éventuelles. Un intérêt particulier réside dans la possibilité de former des collerettes en relief, de hauteur adaptée à celle des colliers, continues ou formées d'éléments discontinus. Ces collerettes maintiennent, sans risque de perte, un collier posé en préparation hors chaîne de montage. Des épaulements arrêtant la rotation des colliers du type à vis tangente en facilitent le serrage.

Le procédé donne, sans finition ni renforcement ultérieur par bande autoadhésive, un meilleur état de surface sous le collier dont la course de serrage se trouve ainsi réduite. Il permet, par ailleurs, un meilleur contrôle de la partie cylindrique terminale sans nécessité de recoupe des extrêmités.

Le coût de renouvellement de l'outillage est modéré et reste très inférieur à ce que serait l'incidence de tout moyen de moulage partiel.

L'homme de l'art peut, bien entendu, apporter au procédé de formage des extrêmités de tubes en caoutchouc et à l'outillage de mise en oeuvre dudit procédé, objets de l'invention, différentes modifications, sans sortir du cadre de l'invention.

## Revendications

1. Procédé de formage, au cours de la vulcanisation en étuve sur un mandrin (2), des extrémités (6,7) d'ébauche (1) de tube en composition élastomérique, dans lequel :
a) ladite ébauche (1) est enfilée sur le mandrin (2), jusqu'à venir buter sur un épaulement constitué par une bague (3),
b) un verrouillage est réalisé par l'intermédiaire d'une bague amovible (5) qui vient buter sur les extrémités (6,7) de l'ébauche (1),
c) les extrémités (6,7) de l'ébauche (1) sont enserrées sur le mandrin (2), par un outillage de formage,
d) l'ensemble comprenant l'ébauche (1), le mandrin (2) et l'outillage de formage est placé dans une étuve pour la vulcanisation de ladite ébauche (1),
e) l'ensemble est retiré de l'étuve, après la vulcanisation de l'ébauche (1),
f) les extrémités (6,7) du tube en composition élastomérique, alors vulcanisé, sont dégagées de l'outillage de formage,
g) après refroidissement, le tube en composition élastomérique est dégagé du mandrin (2),
ledit procédé étant caractérisé en ce que
l'outillage de formage est constitué d'une jupe radialement déformable (4), en composition élastomérique vulcanisée,
en ce que le serrage des extrémités (6,7) de l'ébauche (1) sur le mandrin (2) est assuré sous l'effet de la seule élasticité circonférentielle d'une corolle (11) constituant la partie d'extrémité libre de ladite jupe radialement déformable (4)
et en ce que les extrémités (6,7) du tube en composition élastomérique vulcanisé sont dégagées de la jupe radialement déformable (4) par une légère poussée axiale (P) sur ladite corolle (11).

2. Procédé de formage des extrémités (6,7) de tubes selon la revendication 1, caractérisé en ce que la jupe radialement déformable (4) est portée en position retroussée (13), dans un équilibre stable par tension circonférentielle de la corolle (11), pendant les opérations préparatoires de mise en place de l'ébauche (1) sur le mandrin (2), à température modérée.

3. Procédé de formage des extrémités (6,7) de tubes selon la revendication 1, caractérisé en ce que la jupe radialement déformable (4) porte sur sa surface cylindrique interne des marquages, en relief ou en creux, conjugués à ceux à reproduire sur les extrémités (6,7) de l'ébauche (1).

4. Procédé de formage des extrémités (6,7) de tubes selon la revendication 1, caractérisé en ce que la surface cylindrique interne de la jupe radialement déformable (4) porte des formes en creux qui viennent créer, au cours de la vulcanisation de l'ébauche (1), sur lesdites extrémités (6,7), des collerettes (8), en relief, destinées au positionnement ultérieur de colliers.

5. Procédé de formage des extrémités (6,7) de tubes selon la revendication 4, caractérisé en ce que les collerettes (8), en relief, portées par lesdites extrémités (6,7) sont continues sur la périphérie du tube.

6. Procédé de formage des extrémités (6,7) de tubes selon la revendication 4, caractérisé en ce que les collerettes (8) sont discontinues et constituées d'épaulements pour le positionnement ultérieur de colliers du type à vis tangente.

7. Outillage pour la mise en oeuvre du procédé de formage des extrémités (6,7) de tubes selon l'une des revendications 1 à 6, caractérisé en ce que la jupe radialement déformable (4) est fixée à une bague (3), solidaire du mandrin (2) ou à une bague amovible (5), par serrage assuré par un collier de maintien (14) sur au plus la moitié de la longueur de la bague (3) ou (5) et qu'elle glisse le long de la partie libre de ladite bague (3) ou (5), lorsqu'elle est manoeuvrée par une poussée axiale (P) sur la corolle (11).

## Patentansprüche

1. Verfahren zum Formen der Endstücke (6, 7) eines Rohlings (1) eines Rohres aus einer Elastomerverbindung bei der Heißluftvulkanisation auf einem Dorn (2), bei dem:
a) der Rohling (1) bis zum Anschlagen an einem von einem Ring (3) gebildeten Absatz auf den Dorn (2) aufgesetzt wird,
b) mittels eines abnehmbaren Ringes (5), der an den Endstücken (6, 7) des Rohlings (1) in Anlage gelangt, eine Arretierung geschaffen wird,
c) die Endstücke (6, 7) des Rohlings (1) mit einem Formwerkzeug auf dem Dorn (2) eingespannt werden,
d) die den Rohling (1), den Dorn (2) und das Formwerkzeug aufweisende Anordnung zum Vulkanisieren des Rohlings (1) in einen Formofen gesetzt wird,
e) die Anordnung nach dem Vulkanisieren des Rohlings (1) aus dem Formofen genommen wird,
f) die Endstücke (6, 7) des Rohres aus der dann vulkanisierten Elastomerverbindung von dem Formwerkzeug freigesetzt werden,
g) das Rohr aus der Elastomerverbindung nach dem Abkühlen von dem Dorn (2) abgenommen wird,
dadurch gekennzeichnet, daß
das Formwerkzeug eine radial verformbare Schürze (4) aus einer vulkanisierten Elastomerverbindung aufweist,
die Einspannung der Endstücke (6, 7) des Rohlings (1) auf dem Dorn (2) auf der bloßen Umfangselastizität eines Kragens (11) beruht, der den freien Endabschnitt der radial verformbaren Schürze (4) bildet,
und die Endstücke (6, 7) des Rohres aus der vulkanisierten Elastomerverbindung durch leichten axialen Druck (P) auf den Kragen (11) von der radial verformbaren Schürze (4) freigesetzt werden.

2. Verfahren zum Formen der Endstücke (6, 7) von Rohren nach Anspruch 1, dadurch gekennzeichnet, daß die radial verformbare Schürze (4) während der Vorbereitungsvorgänge für das Aufsetzen des Rohlings (1) auf den Dorn (2) bei mäßiger Temperatur in eine umgestülpte Stellung (13) von durch die Umfangsspannung des Kragens (11) stabilem Gleichgewicht gebracht wird.

3. Verfahren zum Formen der Endstücke (6, 7) von Rohren nach Anspruch 1, dadurch gekennzeichnet, daß die radial verformbare Schürze (4) auf ihrer inneren zylindrischen Oberfläche erhabene oder vertiefte Markierungen für einen dazu komplementären Abdruck auf den Endstücken (6, 7) des Rohlings (1) aufweist.

4. Verfahren zum Formen der Endstücke (6, 7) von Rohren nach Anspruch 1, dadurch gekennzeichnet, daß die innere zylindrische Oberfläche der radial verformbaren Schürze (4) zurückspringende Formen aufweist, die bei der Vulkanisierung des Rohlings (1) auf den Endstücken (6, 7) zum späteren Positionieren von Schellen dienende erhabene Bünde (8) ausbilden.

5. Verfahren zum Formen der Endstücke (6, 7) von Rohren nach Anspruch 4, dadurch gekennzeichnet, daß die erhabenen Bünde (8) auf den Endstücken (6, 7) durchgängig auf dem Mantel des Rohres ausgebildet sind.

6. Verfahren zum Formen der Endstücke (6, 7) von Rohren nach Anspruch 4, dadurch gekennzeichnet, daß die Bünde (8) unterbrochen und von Vorsprüngen zum späteren Anbringen von Tangentialschraubenschellen gebildet sind.

7. Werkzeug zum Durchführen des Verfahrens zum Formen von Endstücken (6, 7) von Rohren nach einem der Ansprüche 1 bis 6, dadurch gekennzeichnet, daß die radial verformbare Schürze (4) auf einem mit dem Dorn (2) fest verbundenen Ring (3) oder einem abnehmbaren Ring (5) durch Einspannen mittels einer Halteschelle (14) auf höchstens der halben Breite des Rings (3) oder (5) befestigt ist und daß sie längs des freien Teiles des Ringes (3) oder (5) gleitet, wenn sie durch axialen Druck (P) auf den Kragen (11) betätigt wird.

## Claims

1. A process for forming extremities (6, 7) of tube blank (1) made of elastomeric composition, during hot air vulcanisation on a mandrel (2), in which:
a) said blank (1) is passed over the mandrel (2), until it abuts against a shoulder constituted by a ring (3),
b) locking takes place through the intermediary of a removable ring (5) which abuts against the extremities (6, 7) of the blank (1),
c) the extremities (6, 7) of the blank (1) are enclosed on the mandrel (2) by forming equipment,
d) the assembly comprising the blank (1), the mandrel (2) and the forming equipment is placed in an oven for the vulcanisation of said blank (1),
e) the assembly is taken out of the oven, after vulcanisation of the blank (1),
f) the extremities (6, 7) of the tube made of elastomeric composition, then vulcanised, are disengaged from the forming equipment,
g) after cooling, the tube made of elastomeric composition is disengaged from the mandrel (2),
said process being characterised in that
the forming equipment is constituted of a radially deformable skirt (4), made of vulcanised elastomeric composition,
in that the clamping of the extremities (6, 7) of the blank (1) on the mandrel (2) is ensured solely by the effect of the circumferential elasticity of a corolla (11) constituting the free end portion of said radially deformable skirt (4)
and in that the extremities (6, 7) of the tube made of vulcanised elastomeric composition are disengaged from the radially deformable skirt (4) by a slight axial thrust (P) on said corolla (11).

2. A process for forming the extremities (6, 7) of tubes according to Claim 1, characterised in that the radially deformable skirt (4) is carried in a rolled back position (13), in stable equilibrium by circumferential tension of the corolla (11), during the preparatory operations of positioning the blank (1) on the mandrel (2), at a moderate temperature.

3. A process for forming the extremities (6, 7) of tubes according to Claim 1, characterised in that the radially deformable skirt (4) carries relief or recessed markings on its inner cylindrical surface, matching those to be reproduced on the extremities (6, 7) of the blank (1).

4. A process for forming the extremities (6, 7) of tubes according to Claim 1, characterised in that the inner cylindrical surface of the radially deformable skirt (4) carries recessed forms which, during the course of vulcanisation of the blank (1), create flanges (8), in relief, on said extremities (6, 7), intended for the subsequent positioning of collars.

5. A process for forming the extremities (6, 7) of tubes according to Claim 4, characterised in that the flanges (8), in relief, carried by said extremities (6, 7) are continuous over the periphery of the tube.

6. A process for forming the extremities (6, 7) of tubes according to Claim 4, characterised in that the flanges (8) are discontinuous and constituted by shoulders for the subsequent positioning of collars of the endless screw type.

7. Tooling equipment for implementing the process for forming the extremities (6, 7) of tubes according to one of Claims 1 to 6, characterised in that the radially deformable skirt (4) is fixed to a ring (3), integral with the mandrel (2) or with a removable ring (5), by clamping provided by a holding collar (14) over no more than half the length of the ring (3) or (5) and in that it slides along the free part of said ring (3) or (5), when it is manipulated by an axial thrust (P) on the corolla (11).
